# EUROPEAN PATENT APPLICATION

(11) **EP 3 467 467 A1**
(43) Date of publication of application: **10.04.2019**
(21) Application number: 17806330.1
(22) Date of filing: 11.05.2017
(51) Int. Cl.: G01N 1/00, B01L 3/02, F16J 15/06, F16J 15/10, G01N 37/00

(54) **LIQUID INJECTION ATTACHMENT**

(30) Priority: 30.05.2016 JP 2016107921
(71) Applicant: NOK Corporation, Minato-ku Tokyo 105-8585 (JP)
(72) Inventor: FUTASHIMA Ryo, Fujisawa-shi Kanagawa 251-0042 (JP); UMEBAYASHI Hiroshi, Fujisawa-shi Kanagawa 251-0042 (JP); UDA Toru, Fujisawa-shi Kanagawa 251-0042 (JP)
(74) Representative: TBK
(86) International application number: PCT/JP2017/017902
(87) International publication number: WO 2017/208772

(57) **Abstract**

An object of the present invention is to provide a liquid injection attachment that can be used to inject liquid into the inlet (injection port) in a simple way by mounting it to the distal end section of the liquid injecting implement without deformation or damages of the liquid injecting implement while preventing liquid leakage, and that allows the gasket to be reliably attached to the attachment body without complicating manufacturing processes. The object is attained by the fact that a liquid injection attachment 1 includes an attachment body 11 having an insertion opening 11b into which the liquid injecting implement is inserted and a liquid flow outlet 11a; a gasket mounting portion 13 formed on the periphery on the front end side of the attachment body 11; and a gasket 12 mounted to the gasket mounting portion 13 and brought into close contact with the peripheral portion of the liquid flow outlet 11a, wherein the gasket mounting portion 13 has an engaging recess 14 and/or engaging protrusions 15 and 16, the gasket 12 has an engaging protrusion 19 and/or engaging recesses 17 and 18, and the engagement direction thereof is in a direction toward a central axis of the attachment body 11.

## Description

### TECHNICAL FIELD

The present invention relates to a liquid injection attachment. In particular, the present invention relates to a liquid injection attachment that is used when a pipette is used to inject liquid into an inlet into which the liquid is to be introduced.

### BACKGROUND

Attention has been drawn to micro-fluid chips known under the names of Micro Total Analysis Systems (µTAS) or Lab-on-Chips. The micro-fluid chips have microstructures such as microchannels that form a flow channel of a predetermined shape in a substrate and ports, and allow for various operations such as chemical reactions, synthesis, purification, extraction, formation and/or analysis of substances in the microstructures.

The micro-fluid chips are expected to find a wide variety of applications in medical-related markets such as genome analysis, genome-based drug discovery, protein analysis, preventive diagnosis, clinical diagnosis, or drug screening, and chemical analysis, food analysis, or environmental monitoring. When a micro-fluid chip is used, it uses less samples and reagents compared to conventional approaches, it can be disposable, and it reduces significant amount of time for analytical processing. In other words, test costs can be reduced, and tests can be expedited by using a micro-fluid chip.

To use a micro-fluid chip, an operation of injecting liquid such as reagent into a microchannel in the micro-fluid chip is required. The injection of liquid into the microchannel needs to be accomplished without any leakage from an inlet (injection port) of the micro-fluid chip through a liquid injecting implement (micropipette, syringe, or tips attached to them) or a liquid feeding tube. At this time, a joint is needed to connect and fix the liquid injecting implement or the liquid feeding tube to the inlet (injection port) of the micro-fluid chip.

The applicant has proposed a liquid injection attachment detachably mounted to a liquid injecting implement for injecting liquid into an inlet (injection port)(Patent Document 1). The liquid injection attachment has a liquid flow outlet in a front end portion, and is provided with, in a rear end portion, an attachment body of a cylindrical shape consisting of a synthetic resin material, the attachment body having an insertion opening into which a distal end section of the liquid injection attachment is inserted, and a gasket consisting of an elastic material provided around the liquid flow outlet of the attachment body.

The liquid injection attachment can be used to inject liquid into the inlet (injection port) in a simple way only by mounting it to the distal end section of the liquid injecting implement without deformation or damages of the liquid injecting implement while preventing liquid leakage.

### PRIOR ART DOCUMENTS

### PATENT DOCUMENTS

Patent Document 1: WO2015/156331

### SUMMARY OF THE INVENTION

### PROBLEM TO BE SOLVED BY THE INVENTION

Meanwhile, in the liquid injection attachment described in Patent Document 1, it is necessary to bond the attachment body and the gasket with each other in order to reliably attach the gasket to the attachment body. For the bonding, an adhesive or a self-adhesive rubber material as the elastic material constituting the gasket is used.

When an adhesive is used for bonding, a process of applying the adhesive is required in the manufacturing process of the liquid injection attachment, which leads to complicated processes.

When a self-adhesive rubber material is used to form the gasket, a mold release agent is needed in the manufacturing process of the gasket due to deteriorated releasability of the gasket, which leads to complicated processes.

Therefore, an object of the present invention is to provide a liquid injection attachment that can be used to inject liquid into the inlet (injection port) in a simple way only by mounting it to the distal end section of the liquid injecting implement without deformation or damages of the liquid injecting implement while preventing liquid leakage, and that allows the gasket to be reliably attached to the attachment body without complicating manufacturing processes.

Other objects of the present invention will be apparent from the description below.

### MEANS FOR SOLVING PROBLEM

The above object can be attained by embodiments described below.

1. A liquid injection attachment, comprising:
   an attachment body having, on a rear end portion, an insertion opening for receiving a distal end section of a liquid injecting implement inserted thereinto and having a liquid flow outlet on a front end portion;
   a gasket mounting portion formed on a periphery on a front end side of the attachment body; and
   a gasket formed of an elastic material and mounted to the gasket mounting portion, the gasket having a faying portion to be brought into close contact with a faying surface of an annulus ring shape on a peripheral portion of the liquid flow outlet,
   wherein the gasket mounting portion has a gasket engaging recess and/or a gasket engaging protrusion,
   the gasket has an engaging protrusion and/or an engaging recess engaged with the gasket engaging recess and/or the gasket engaging protrusion, and engagement direction thereof is in a direction toward a central axis of the attachment body.
2. The liquid injection attachment according to said 1, wherein
   the gasket mounting portion has the gasket engaging protrusion on the front end side of the attachment body and has the gasket engaging recess behind the gasket engaging protrusion,
   the gasket has an engaging recess and an engaging protrusion engaged with the gasket engaging protrusion and the gasket engaging recess, a maximum outside diameter of the gasket is approximately same as a maximum outside diameter of the attachment body,
   an inside diameter of the liquid flow outlet of the attachment body is approximately same as an inside diameter of the faying portion of the gasket.
3. The liquid injection attachment according to said 1 or 2, wherein an annular lip portion around the liquid flow outlet is provided at a location where a load received from the liquid injecting implement acts on in an axial direction.
4. The liquid injection attachment according to said 1, 2 or 3, wherein the faying surface is a plane perpendicular to the central axis of the attachment body.
5. The liquid injection attachment according to any one of said 1 to 4, wherein the attachment body is made of a synthetic resin material.
6. The liquid injection attachment according to any one of said 1 to 5, wherein the gasket is formed of any of silicon rubber, fluororubber, acrylic rubber, nitrile rubber, and butyl rubber.

### EFFECT OF THE INVENTION

According to the present invention, there can be provided a liquid injection attachment that can be used to inject liquid into the inlet (injection port) in a simple way only by mounting it to the distal end section of the liquid injecting implement without deformation or damages of the liquid injecting implement while preventing liquid leakage, and that allows the gasket to be reliably attached to the attachment body without complicating manufacturing processes.

### BRIEF DESCRIPTION OF DRAWINGS

[Figure 1] Figure 1 is a perspective view in which a liquid injection attachment according to an embodiment of the present invention is used for a micropipette.
[Figure 2] Figure 2 is a perspective view illustrating an exemplary micropipette and pipette tip.
[Figure 3] Figure 3(a) is a sectional view of an attachment body of the liquid injection attachment illustrated in Figure 1, and Figure 3(b) is a sectional view of the liquid injection attachment illustrated in Figure 1.
[Figure 4] Figure 4 is a sectional view illustrating functions and advantages of the liquid injection attachment illustrated in Figure 1 in use on a micropipette.
[Figure 5] Figure 5 is a sectional view illustrating functions and advantages of the liquid injection attachment illustrated in Figure 1 in use on a syringe.
[Figure 6] Figure 6 is a sectional view illustrating another example of the liquid injection attachment of the present invention.
[Figure 7] Figure 7 presents a side view and a sectional view illustrating still another example of the liquid injection attachment of the present invention.
[Figure 8] Figure 8 is a sectional view illustrating still another example of the liquid injection attachment of the present invention.
[Figure 9] Figure 9 illustrates the liquid injection attachment illustrated in Figure 8 as viewed from the front end side.
[Figure 10] Figure 10 is an illustration of an example of a method for injecting liquid.

### DESCRIPTION OF THE PREFERRED EMBODIMENTS

Embodiments of the present invention will now be described with reference to drawings.

### [Configurations of Liquid Injection Attachment]

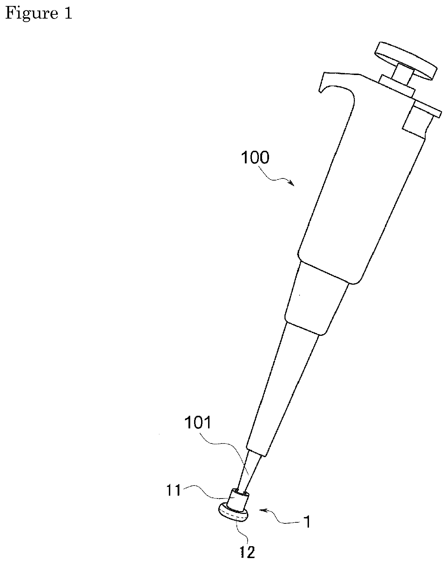

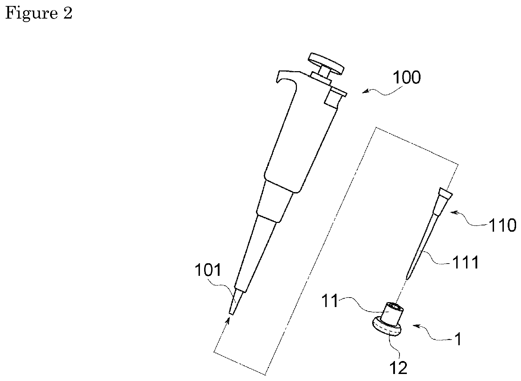

Figure 1 is a perspective view in which a liquid injection attachment according to an embodiment of the present invention is used for a micropipette. Figure 2 is a perspective view illustrating an exemplary micropipette and pipette tip.

As illustrated in Figure 1, a liquid injection attachment 1 of the present invention is used while it is detachably mounted to a distal end section 101 of a micropipette 100, which serves as a liquid injecting implement. The micropipette 100 is used to take in and inject a minute amount of liquid on the order of microliters.

The liquid injection attachment 1 is not limited to the micropipette 100 and is used for a variety of liquid injecting implements. For example, the liquid injection attachment 1 may be used for a general pipette, a syringe, or the like. In addition, as illustrated in Figure 2, the liquid injection attachment 1 may be detachably mounted to a distal end section 111 of a pipette tip 110 attached to the distal end section of the micropipette 100.

The micropipette 100 and the pipette tip 110 that may be used have distal end sections 101, 111 formed of a thermoplastic resin by injection molding or the like. Description will mainly be made herein below to the case in which the liquid injection attachment is detachably mounted to the distal end section 101 of the micropipette 100.

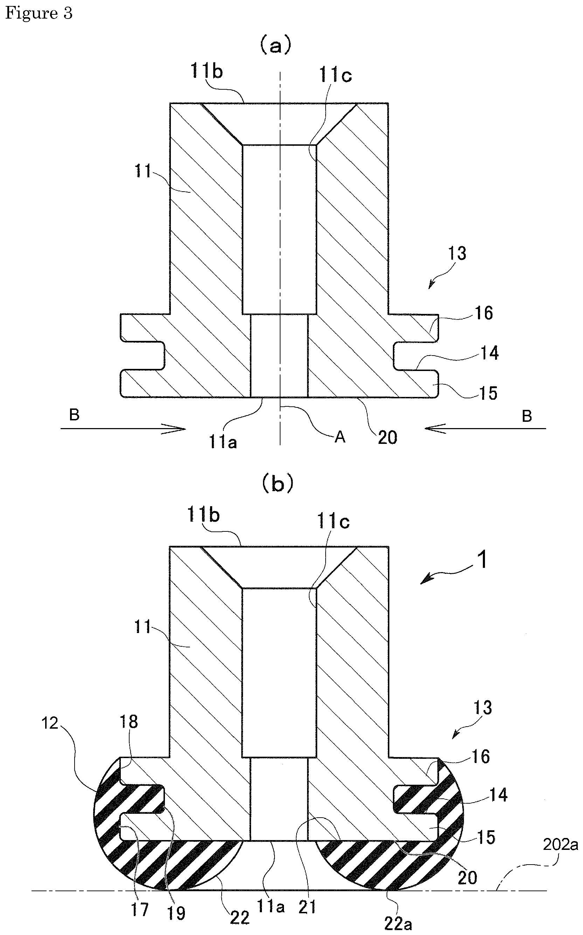

Figure 3(a) is a sectional view of an attachment body of the liquid injection attachment illustrated in Figure 1, and Figure 3(b) is a sectional view of the liquid injection attachment illustrated in Figure 1.

The term "front end portion" as used herein refers to an end on the side where liquid is discharged from the liquid injection attachment 1, and "rear end portion" refers to an end axially opposite from the front end portion. In Figure 3, an end on the downside corresponds to the "front end portion", and an end on the upside corresponds to the "rear end portion".

As illustrated in Figures 1 and 3(b), the liquid injection attachment 1 is made up of an attachment body 11 mounted to the distal end section 101 of the micropipette 100, and a gasket 12 held by the attachment body 11.

The attachment body 11 is formed in a cylindrical shape to be mounted to the outer periphery of the distal end section 101 of the micropipette 100. The attachment body 11 in a specific configuration is provided with an insertion opening 11b on the rear end portion and a liquid flow outlet 11a on the front end portion. The distal end section 101 of the micropipette 100 is inserted into the insertion opening 11b. Liquid in the micropipette 100 is discharged from the liquid flow outlet 11a through the attachment body 11. An insert through-hole (insertion hole) 11c of a cylindrical shape penetrates from the insertion opening 11b to the liquid flow outlet 11a.

The attachment body 11 may be formed in a cylindrical shape having a constant inside diameter of the insert through-hole 11c. However, to achieve better mountability of the micropipette 100 onto the distal end section 101, as illustrated in Figure 3(a), the peripheral portion of the insertion opening 11b preferably has a funnel-like, chamfered shape. The attachment body 11 may also be in a funnel-like tapered shape having the inside diameter that reduces progressively or in a step wise. In this case, it is possible to ensure that the distal end section 101 of the micropipette 100 is prevented from being excessively inserted into the insert through-hole 11c.

The attachment body 11 is formed of a hard material to maintain a stable mounted state thereof on the distal end section 101 of the micropipette 100. Preferably, a specific material is, but not particularly limited to, an inexpensive and easily moldable synthetic resin. A specific synthetic resin is selected as appropriate depending on the type of liquid injected and includes, for example, a thermoplastic resin such as polyethylene and polypropylene.

A gasket mounting portion 13 is formed on the periphery on the front end side of the attachment body 11. As illustrated in Figure 3(b), a gasket 12 is mounted to gasket mounting portion 13. The gasket 12 is formed of an elastic material softer than the attachment body 11. The material forming the gasket 12 may be selected depending on the material forming the attachment body 11 or the type of liquid injected, and for example, silicone rubber, fluororubber, acrylic rubber, nitrile rubber, butyl rubber, and the like may preferably be used.

The gasket mounting portion 13 has a gasket engaging recess 14 and gasket engaging protrusions 15 and 16. The gasket engaging protrusions 15 and 16 are raised strips formed around the entire perimeter of the outer periphery on the front end side of the attachment body 11, and integral with the attachment body 11. The gasket engaging protrusions 15 and 16 are shaped like annulus ring members attached to the outer periphery on the front end side of a cylindrical portion of the attachment body 11. The gasket engaging recess 14 is a portion between the two gasket engaging protrusions 15 and 16 and a groove formed around the entire perimeter of the outer periphery on the front end side of the attachment body 11.

Only any one of the gasket engaging recess 14 and the gasket engaging protrusions 15 and 16 may be provided.

The gasket 12 is mounted to the gasket mounting portion 13 such that it surrounds the liquid flow outlet 11a of the attachment body 11. The gasket 12 is formed in an annulus ring shape as a whole, and has engaging recesses 17 and 18 and an engaging protrusion 19 on the inner periphery. The engaging recesses 17 and 18 are grooves formed around the entire perimeter of the inner periphery of the gasket 12. The engaging protrusion 19 is a portion between the two engaging recesses 17 and 18 and a raised strip formed around the entire perimeter of the inner periphery of the gasket 12. The engaging protrusion 19 is engaged with the gasket engaging recess 14 of the gasket mounting portion 13. The engaging recesses 17 and 18 are engaged with the gasket engaging protrusions 15 and 16 of the gasket mounting portion 13. The engagement directions of the engaging protrusion 19 engaged with the gasket engaging recess 14 and the engaging recesses 17 and 18 engaged with the gasket engaging protrusions 15 and 16 are in a direction toward the central axis A of the attachment body 11 (centripetal direction) as shown by an arrow B in Figure 3(a). In other words, the gasket 12 will not be detached from the gasket mounting portion 13 unless the inside diameter of the gasket 12 is expanded in a direction away from the central axis A of the attachment body 11 (centrifugal direction).

Only any one of the engaging protrusion 19 and the engaging recesses 17 and 18 may be provided.

A front end portion of the attachment body 11 (the peripheral portion of the liquid flow outlet 11a) serves as a faying surface 20 of an annulus ring shape. The gasket 12 has a faying portion 21 to be brought into close contact with the faying surface 20. The faying portion 21 is in close contact with the faying surface 20 when the engaging protrusion 19 is engaged with the gasket engaging recess 14 and the engaging recesses 17 and 18 are engaged with the gasket engaging protrusions 15 and 16. The faying surface 20 and the faying portion 21 are preferably planes perpendicular to the central axis A of the attachment body 11.

The gasket 12 covers the faying surface 20, which is the front end portion of the attachment body 11, and projects on the front end side (lower end side in Figure 3(b)) of the attachment body 11. The portion projecting on the front end side of the attachment body 11 beyond the faying surface 20 assumes a torus with the front end face 22 surrounding the liquid flow outlet 11a. In other words, when the gasket 12 is pressed onto a plane 200a facing the liquid flow outlet 11a, it is a narrow annulus ring portion (an annual lip portion serving as a seal portion), which is a frontmost end portion 22a of the front end face 22, that is brought into contact with the plane. The front end face 22 assumes a funnel shape (a shape having an inwardly projecting conical surface) toward the liquid flow outlet 11a on the inward side of the frontmost end portion 22a. The front end face 22 assumes a shape having an outwardly projecting conical surface on the outward side of the frontmost end portion 22a.

The gasket 12 can be integrally formed and mounted to the attachment body 11 by so-called double molding (injection molding or compression molding) using different materials. The gasket 12 may also be formed (injection molded or compression molded) as a separate body from the attachment body 11 and mounted to the gasket mounting portion 13. With a different material from the attachment body 11, the gasket 12 can be formed of a material that has better sealing properties and is specially made for sealing performance. In this way, more choices of materials are available for gasket 12 as compared to those formed of an elastic material in the entire attachment as in a conventional way.

### [Liquid Injection Attachment in Use]

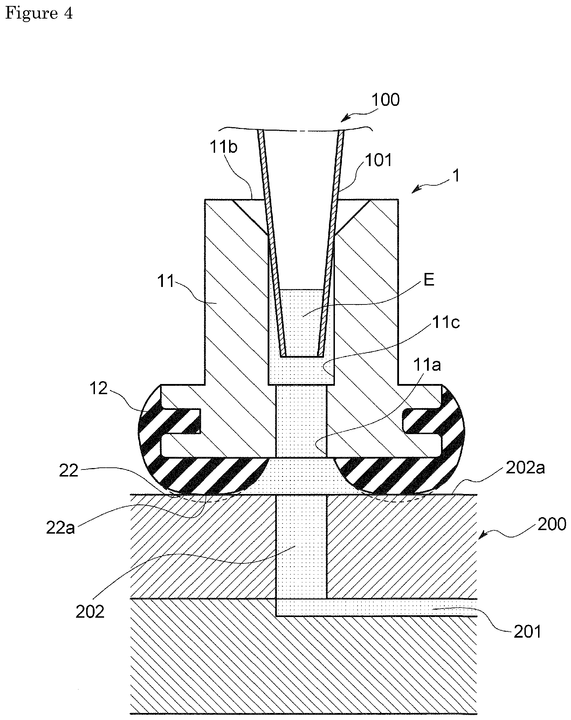

Figure 4 is a sectional view illustrating functions and advantages of the liquid injection attachment illustrated in Figure 1 in use on a micropipette.

Description will now be made to functions and advantages of the liquid injection attachment 1 with reference to, as an example, injection of liquid E from an inlet (injection port) 202 to a microchannel 201 formed in a micro-fluid chip 200, as illustrated in Figure 4. The micro-fluid chip 200 has microstructures such as the microchannel 201 that forms a flow channel of a predetermined shape in a substrate and ports. The liquid into the microchannel 201 is injected from the inlet (injection port) 202 of the micro-fluid chip 200.

First, the tapered distal end section 101 of the micropipette 100 that has taken in and holds the liquid E is inserted from the insertion opening 11b into the insert through-hole 11c such that the liquid injection attachment 1 is mounted to the distal end section 101. The distal end section 101 of the micropipette 100 holds the attachment body 11 with its expanded portion being in contact with an inner peripheral surface of the insert through-hole 11c. Since the distal end section 101 of the micropipette 100 has a tapered shape diametrically expanding from the distal end portion toward the base end side, the deeper into the insert through-hole 11c it is inserted, the stronger the contact force of the insert through-hole 11c against the inner peripheral surface, so that the attachment body 11 is reliably held. At this time, the peripheral surface of the distal end section 101 of the micropipette 100 is in close contact with the inner peripheral surface of the insert through-hole 11c, serving as a seal portion.

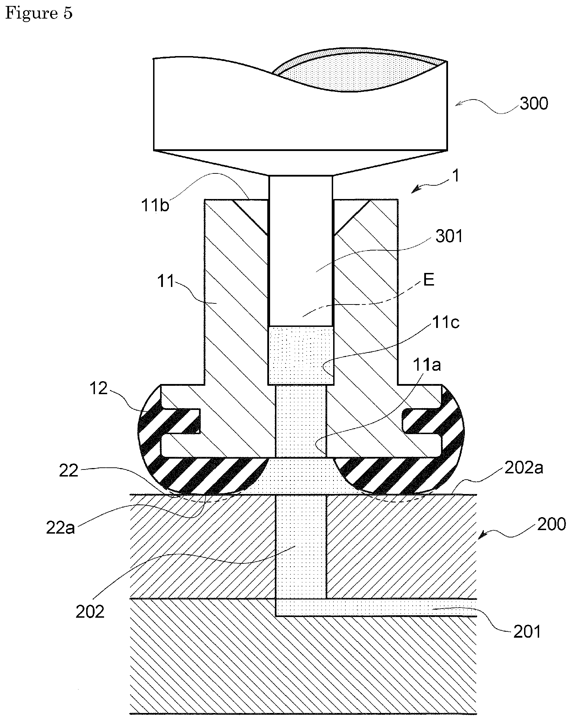

Figure 5 is a sectional view illustrating functions and advantages of the liquid injection attachment illustrated in Figure 1 in use on a syringe.

As illustrated in Figure 5, in the case in which a distal end section 301 of a syringe 300 that has taken in and holds the liquid E is inserted from the insertion opening 11b into the insert through-hole 11c, the distal end section 301 of the syringe 300 holds the attachment body 11 with the outer peripheral surface being in contact with the inner peripheral surface of the insert through-hole 11c. The distal end section 301 of the syringe 300 has approximately the same diameter as that of the insert through-hole 11c, which serves as a loose fit or an interference fit to reliably hold the attachment body 11. At this time, the outer peripheral surface of the distal end section 301 of the syringe 300 is in close contact with the inner peripheral surface of the insert through-hole 11c, serving as a seal portion.

Then a front end face of the liquid injection attachment 1 is pressed onto an upper face (injection face) 202a of the micro-fluid chip 200. At this time, the frontmost end portion 22a of the front end face 22 of the gasket 12 is brought into contact with the periphery of the inlet (injection port) 202 of the upper face (injection face) 202a. When a load is applied to the liquid injection attachment 1 via the micropipette 100, the gasket 12 is compressed and deformed to generate a reaction force due to the compressive deformation. The reaction force causes the front end face 22 of the gasket 12 to be in close contact with the upper face (injection face) 202a of the micro-fluid chip 200 in a region including the frontmost end portion 22a (seal face).

By discharging the liquid E from the micropipette 100 while the front end face 22 of the gasket 12 is in close contact with the upper face (injection face) 202a of the micro-fluid chip 200, the liquid E is injected into the inlet (injection port) 202 from within the insert through-hole 11c through the liquid flow outlet 11a and the central portion of the gasket 12. At this time, since the front end face 22 of the gasket 12 is in close contact with the upper face (injection face) 202a of the micro-fluid chip 200, the liquid E does not leak to the outside.

In this way, in the liquid injection attachment 1 of the present invention, the reaction force generated by the compressive deformation of the gasket 12 is used during liquid injection. In other words, the reaction force from the gasket 12 counteracts an injection pressure during liquid injection. Consequently, the liquid injection attachment 1 can provide better sealing performance, and introduce the liquid E into the microchannel 201 from the micropipette 100 through the liquid flow outlet 11a and inlet (injection port) 202 without leakage to the outside.

The gasket 12 as illustrated in the embodiment assumes a torus in the front end face 22 and is a preferable aspect in the present invention. In the gasket 12, the frontmost end portion 22a serves as the narrow annulus ring portion (the annual lip portion serving as a seal portion). Accordingly, when the gasket 12 is pressed onto the upper face (injection face) 202a of the micro-fluid chip 200, the contact pressure (seal contact pressure) peaks due to the frontmost end portion 22a (the annual lip portion serving as a seal portion). Consequently, excellent sealing performance is provided as compared to the case in which a seal is made by a gasket that has a planar distal end as in a conventional attachment, providing a high anti-leakage effect during liquid injection.

In the liquid injection attachment 1, the gasket 12 is the only element that provides the sealing performance by compressive deformation. Accordingly, a load needed to provide the sealing performance may be as small as the gasket 12 can be compressed and deformed. Further, when the gasket 12 is loaded, the distal end section 101 of the micropipette 100 is supported by the cylindrical attachment body 11 in the periphery. According to the liquid injection attachment 1, therefore, the gasket 12 can easily be compressed and deformed with a small load during liquid injection, providing better sealing performance without deformation or damages of the distal end section 101.

In addition, in the liquid injection attachment 1, since the engagement direction of the gasket 12 with the gasket mounting portion 13 is in a direction toward the central axis A of the attachment body 11 (centripetal direction), even repeated loading to compressively deform the gasket 12 does not detach the gasket 12 from the gasket mounting portion 13. Further, since the faying surface 20 and the faying portion 21 are planes perpendicular to the central axis A of the attachment body 11, the gasket 12 may not be deformed or damaged even when the gasket 12 is repeatedly subjected to compressive deformation.

In addition, the liquid injection attachment 11 has fewer components and simple structure, and thus entails lower manufacturing costs. Further, the liquid injection attachment 1 is disposal, and thus cleaning is eliminated. Consequently, the liquid may not be contaminated.

Furthermore, the liquid injection attachment 1 as described above can be applied to an automatic pipette device or a pipetting robot. Consequently, the injection operation can be automated. In addition, the liquid injection attachment 1 can be mounted to each distal end section of a multi-channel pipette to enable the liquid to be injected to more than one inlet (injection port) at the same time.

### [Further Embodiments of Liquid Injection Attachment]

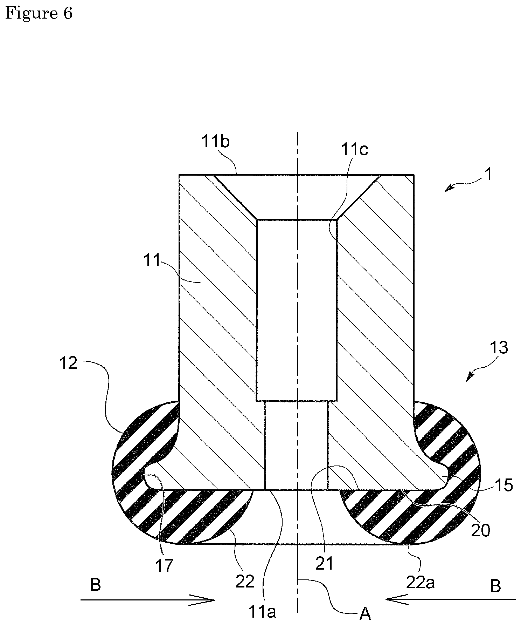

Figure 6 is a sectional view illustrating another example of the liquid injection attachment of the present invention. Elements with the same reference numerals as the liquid injection attachment 1 illustrated in Figures 1 to 4 are elements having the same configuration, and thus the description of those elements will be omitted with reference to the above description.

As illustrated in Figure 6, the liquid injection attachment 1 may be constructed with only one gasket engaging protrusion 15 provided on the gasket mounting portion 13. The gasket engaging protrusion 15 is a raised strip formed around the entire perimeter of the outer periphery on the front end side of the attachment body 11, and integral with the attachment body 11, as described above.

An engaging recess 17 is provided on the inner periphery of the gasket 12. The engaging recess 17 is a groove formed around the entire perimeter of the inner periphery of the gasket 12. The engaging recess 17 is engaged with the gasket engaging protrusion 15 of the gasket mounting portion 13. The engagement direction of the engaging recess 17 engaged with the gasket engaging protrusion 15 is in a direction toward the central axis A of the attachment body 11 (centripetal direction) as shown by an arrow B in Figure 6.

A front end portion of the attachment body 11 (the peripheral portion of the liquid flow outlet 11a) serves as a faying surface 20 of an annulus ring shape. The gasket 12 has a faying portion 21 to be in close contact with the faying surface 20. The faying portion 21 is in close contact with the faying surface 20 when the engaging recess 17 is engaged with the gasket engaging protrusion 15. The faying surface 20 and the faying portion 21 are preferably planes perpendicular to the central axis A of the attachment body 11.

The gasket 12 covers the faying surface 20, which is the front end portion of the attachment body 11, and projects on the front end side (lower end side in Figure 6) of the attachment body 11 beyond the faying surface 20. The portion projecting on the front end side of the attachment body 11 beyond the faying surface 20 assumes a torus with the front end face 22 surrounding the liquid flow outlet 11a.

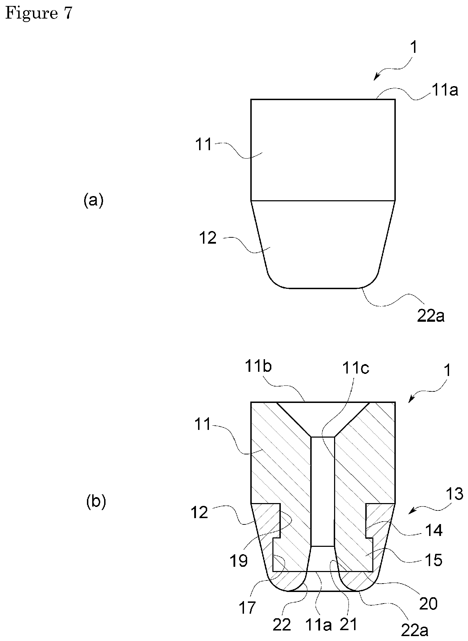

Figures 7(a) and 7(b) are a side view and a sectional view illustrating still another example of the liquid injection attachment of the present invention.

As illustrated in Figure 7, the liquid injection attachment 1 may be configured such that the maximum outside diameter of the gasket 12 is the same as the maximum outside diameter of the attachment body 11.

Specifically, in the embodiment, the gasket mounting portion 13 has a gasket engaging protrusion 15 on the front end side of the attachment body 11 and has a gasket engaging recess 14 behind the gasket engaging protrusion 15. The gasket 12 has an engaging recess 17 and an engaging protrusion 19 respectively engaged with the gasket engaging protrusion 15 and the gasket engaging recess 14.

The maximum outside diameter of the gasket 12 is approximately the same as the maximum outside diameter of the attachment body 11. In addition, the inside diameter of the liquid flow outlet 11a of the attachment body 11 is approximately the same as the inside diameter of the faying portion 21 of the gasket 12.

In the embodiment, a frontmost end portion 22a (an annual lip portion serving as a seal portion) of the gasket 12 is provide around the liquid flow outlet 11a at a location where a load received from the liquid injecting implement (micropipette 100 or syringe 300) acts on in the axial direction of the attachment body 11.

Accordingly, when load is exerted from the liquid injecting implement 100, 300 in the axial direction of the attachment body 11, the load acts on the frontmost end portion 22a of the gasket 12 (the annual lip portion serving as a seal portion) via the attachment body 11. In this way, the frontmost end portion 22a of the gasket 12 can efficiently be compressed and deformed, so that the amount of collapse sufficient for forming the seal element can be secured. In addition, only the frontmost end portion 22a of the gasket 12 can be compressed and deformed when the load is applied.

### [Still Further Embodiments of Liquid Injection Attachment]

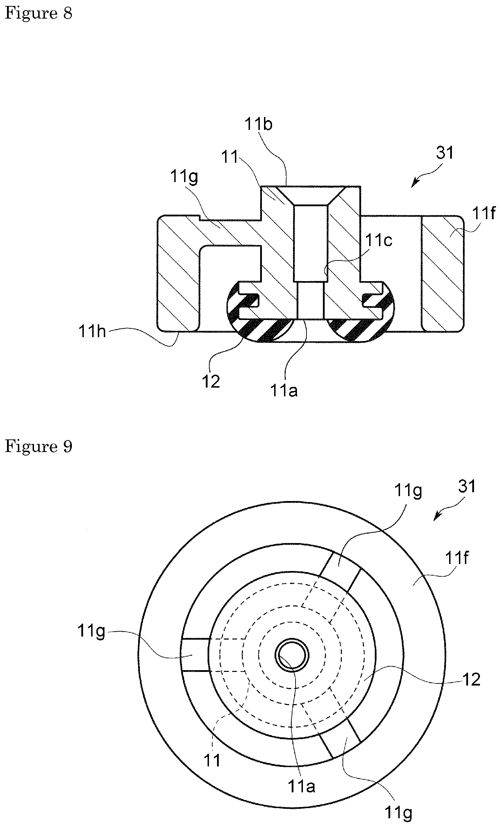

Figure 8 is a sectional view illustrating still another example of the liquid injection attachment of the present invention, and Figure 9 illustrates the liquid injection attachment illustrated in Figure 8 as viewed from the front end side. Elements with the same reference numerals as the liquid injection attachment 1 illustrated in Figures 1 to 4 are elements having the same configuration, and thus the description of those elements will be omitted with reference to the above description.

As illustrated in Figures 8 and 9, the liquid injection attachment 31 is provided with a stopper portion 11f for preventing inclination on the attachment body 11. The stopper portion 11f is formed in an annulus ring shape, and is connected to the attachment body 11 with a suitable number of connecting rods 11g. The stopper portion 11f is located on the outer periphery side of the attachment body 11, and concentric with the attachment body 11. The stopper portion 11f is also located on the outer periphery side of the gasket 12. A stopper front end face (lower end portion in Figure 8) 11h of the stopper portion 11f projects beyond the liquid flow outlet 11a on the front end side, and is shifted backward from the frontmost end portion 22a of the gasket 12.

The liquid injection attachment 31 has an advantage as described below in addition to the advantage of the liquid injection attachment 1 described above. When the gasket 12 is brought into contact with the periphery of the inlet (injection port) 202 during liquid injection into the micro-fluid chip 200, the stopper front end face 11h contacts the upper face (injection face) 202a if the micropipette 100 and liquid injection attachment 31 is inclined with respect to the upper face (injection face) 202a of the micro-fluid chip 200.

At this time, the stopper portion 11f supports the inclined liquid injection attachment 31 to prevent further inclination. It is then possible to correct the inclination of the micropipette 100 and the liquid injection attachment 31 with the contacted portion of the stopper front end face 11h with the upper face (injection face) 202a as a fulcrum point. Since the stopper portion 11f has an annulus ring shape, it is easy to return the micropipette 100 and the liquid injection attachment 31 inclined in any direction to a vertical position.

Then, while the micropipette 100 and the liquid injection attachment 31 are maintained in the vertical position with respect to the upper face (injection face) 202a of the micro-fluid chip 200, liquid can be injected by compressing and deforming the gasket 12. In this way, better sealing performance can be provided during liquid injection.

The stopper portion 11f also contacts the periphery of the inlet (injection port) 202 in the stopper front end face 11h when an excessive load is caused due to the compressive deformation of the gasket 12, preventing excessive compressive deformation of the gasket 12. In this way, stable sealing performance can be maintained by the liquid injection attachment 31.

The advantage described above is particularly evident when the liquid injection attachment 31 is applied to an automatic liquid injection system using an automatic pipette device or a pipetting robot. Specifically, even when an excessive load is exerted due to variation in the coverage of the attachment body 11 on the distal end section 101 of the micropipette 100 (the insertion depth of the distal end section 101 into the attachment body 11), excessive compressive deformation of the gasket 12 is prevented and stable sealing performance can be maintained by the liquid injection attachment 31. In this way, it is not necessary to accurately control the height posting of the micropipette 100, nor is it to accurately maintain a high accuracy of finishing for the insertion opening 11b of the attachment body 11.

The stopper portion 11f is not limited to that of the annulus ring shape described above, and may be shaped to have points distributed at at least three equal angular positions around the liquid flow outlet 11a.

Furthermore, the stopper portion 11f is not limited to that integrally connected to the attachment body 11, and may be formed as a separate body from the attachment body 11 and then attached to the attachment body 11.

In embodiments described above, the gasket engaging protrusion and the engaging recess and/or the gasket engaging recess and engaging protrusion are not limited to the raised strip nor the groove around the entire perimeter of the outer peripheral portion of the attachment body 11 and the inner peripheral portion of the gasket 12, and may be engaging projections or engaging holes sparsely distributed on the outer peripheral portion of the attachment body 11 and the inner peripheral portion of the gasket 12.

### [Method for Injecting Liquid]

Description will now be made to an example of a method for injecting liquid using such a liquid injection attachment.

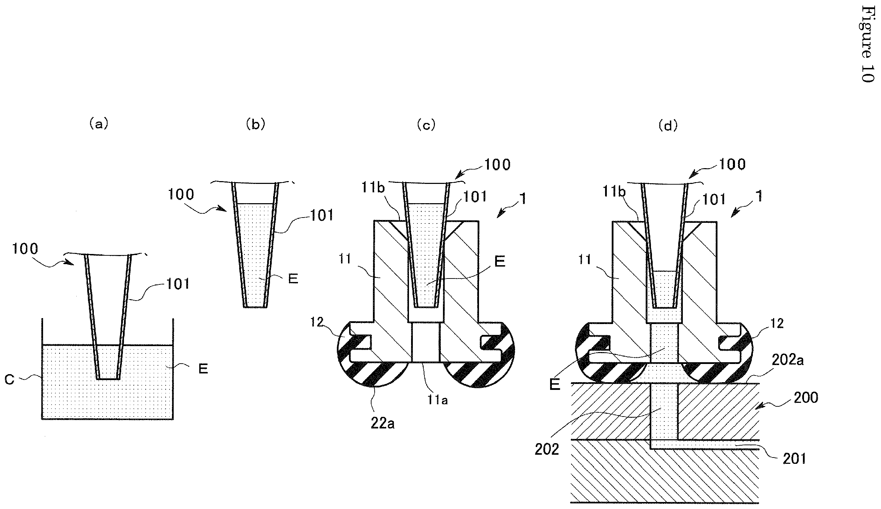

Figure 10 is an illustration of an example of a method for injecting liquid.

Description will be made here to, as an example, how liquid is to be injected into a microchannel 201 in the micro-fluid chip 200 using the liquid injection attachment 1 illustrated in Figures 1 to 4. However, in the method for injecting liquid of the present invention, the liquid injection attachments illustrated in Figures 6 to 9 may also be used for liquid injection.

First, the micropipette 100 is used to suck or collect liquid E such as reagent contained in a sample container C (such as microtube, sample tube, vial, test tube, centrifuge tube, or conical tube) (Figure 10(a)). At this time, the liquid injection attachment 1 is not yet mounted on the distal end section 101 of the micropipette 100. After the liquid E is sucked or collected, the micropipette 100 is picked up from the sample container C (Figure 10(b)).

Next, the distal end section 101 of the micropipette 100 is inserted into the insertion opening 11b of the liquid injection attachment 1 for mounting the liquid injection attachment 1 to the distal end section 101 (Figure 10(c)). The mounting of the liquid injection attachment 1 is completed when the inner peripheral surface of the attachment body 11 is in close contact with the outer peripheral surface of the distal end section 101 such that further insertion is prevented. When the mounting of the liquid injection attachment 1 is completed, a distal end face of the distal end section 101 is located on the insertion opening 11b side from the gasket 12 of the liquid injection attachment 1 to some extent.

Next, the micropipette 100 having the liquid injection attachment 1 mounted thereon is directed and pressed onto the inlet (injection port) 202 of the micro-fluid chip 200. In other word, the gasket 12 of the liquid injection attachment 1 is brought into contact with the upper face (injection face) 202a around the inlet (injection port) 202 (Figure 10(d)). The frontmost end portion 22a of the gasket 12 has a diameter larger than the bore of the inlet (injection port) 202, and thus the gasket 12 is brought into contact with the upper face (injection face) 202a of the micro-fluid chip 200 around the inlet (injection port) 202. Then, the micropipette 100 is directed and pressed onto the inlet (injection port) 202 to apply a load, which compresses and deforms the gasket 12.

Next, the liquid E in the micropipette 100 is injected into the microchannel 201 of the micro-fluid chip 200 by the injection pressure of the micropipette 100. At this time, since the gasket 12 is compressed and deformed to generate a reaction force, the liquid E does not leak to the outside. The liquid E is introduced into the microchannel 201 from the micropipette 100 through the liquid flow outlet 11a of the liquid injection attachment 1 and the inlet (injection port) 202.

According to the method for injecting liquid, to inject liquid from the micropipette 100 to the inlet (injection port) 202, better sealing effect produced by the gasket 12 can prevent liquid leakage and liquid injection operation can be accomplished in a simple way without deformation or damages of the liquid injecting implement, only by mounting the liquid injection attachment 1 to the distal end section 101 of the micropipette 100.

In the step of sucking or collecting the liquid E contained in the sample container C, since the liquid injection attachment 1 is not yet mounted to the distal end section 101 of the micropipette 100, it is not dipped into the liquid E in the sample container C. In this way, dripping of liquid can be avoided.

Commercially available products without gasket can be used for the liquid injecting implement such as the micropipette 100.

Furthermore, in the method for injecting liquid, an automatic pipette device or a pipetting robot can be used for mounting the liquid injection attachment 1 to the distal end section 101 of the micropipette 100 or for pressing the micropipette 100 onto the micro-fluid chip 200, and thus the liquid can be injected by a simple system configuration. In addition, the injection can be automated. Furthermore, when a multi-channel pipette is used, liquid can be injected into more than one micro-fluid chip 200 at the same time.

### EXPLANATIONS OF LETTERS OR NUMERALS

1, 31: liquid injection attachment
11: attachment body
   11a: liquid flow outlet
   11b: insertion opening
   11c: insert through-hole
   11f: stopper portion
   11g: connecting rod
   11h: stopper front end face
12: gasket
13: gasket mounting portion
14: gasket engaging recess
15, 16: gasket engaging protrusion
17, 18: engaging recess
19: engaging protrusion
20: faying surface
21: faying portion
22: front end face
   22a: frontmost end portion
100: liquid injecting implement (micropipette)
101: distal end section
110: pipette tip
111: distal end section
200: micro-fluid chip
201: microchannel
202: inlet (injection port)
   202a: upper face (injection face)
300: syringe
301: distal end section
   C: sample container
   E: liquid such as reagent

## Claims

1. A liquid injection attachment, comprising:
an attachment body having, on a rear end portion, an insertion opening for receiving a distal end section of a liquid injecting implement inserted thereinto and having a liquid flow outlet on a front end portion;
a gasket mounting portion formed on a periphery on a front end side of the attachment body; and
a gasket formed of an elastic material and mounted to the gasket mounting portion, the gasket having a faying portion to be brought into close contact with a faying surface of an annulus ring shape on a peripheral portion of the liquid flow outlet,
wherein the gasket mounting portion has a gasket engaging recess and/or a gasket engaging protrusion,
the gasket has an engaging protrusion and/or an engaging recess engaged with the gasket engaging recess and/or the gasket engaging protrusion, and engagement direction thereof is in a direction toward a central axis of the attachment body.

2. The liquid injection attachment according to claim 1, wherein
the gasket mounting portion has the gasket engaging protrusion on the front end side of the attachment body and has the gasket engaging recess behind the gasket engaging protrusion,
the gasket has an engaging recess and an engaging protrusion engaged with the gasket engaging protrusion and the gasket engaging recess, a maximum outside diameter of the gasket is approximately same as a maximum outside diameter of the attachment body, an inside diameter of the liquid flow outlet of the attachment body is approximately same as an inside diameter of the faying portion of the gasket.

3. The liquid injection attachment according to claim 1 or 2, wherein an annular lip portion around the liquid flow outlet is provided at a location where a load received from the liquid injecting implement acts on in an axial direction.

4. The liquid injection attachment according to claim 1, 2 or 3, wherein the faying surface is a plane perpendicular to the central axis of the attachment body.

5. The liquid injection attachment according to any one of claims 1 to 4, wherein the attachment body is made of a synthetic resin material.

6. The liquid injection attachment according to any one of claims 1 to 5, wherein the gasket is formed of any of silicon rubber, fluororubber, acrylic rubber, nitrile rubber, and butyl rubber.
